# EUROPÄISCHE PATENTSCHRIFT

(11) **EP 2 000 359 B1**
(45) Veröffentlichungstag und Bekanntmachung des Hinweises auf die Patenterteilung: **15.04.2015**
(21) Anmeldenummer: 08009912.0
(22) Anmeldetag: 30.05.2008
(51) Int. Cl.: B60Q 11/00, H05B 33/08

(54) **Schaltungsanordung**
Switching assembly
Agencement de circuit

(30) Priorität: 01.06.2007 DE 202007007777 U
(43) Veröffentlichungstag der Anmeldung: 10.12.2008
(73) Patentinhaber: ConWys AG, 6023 Rothenburg (CH)
(72) Erfinder: Wystron, Alexander, 6005 Luzern (CH)
(74) Vertreter: Stenger, Watzke & Ring

(56) Entgegenhaltungen:
- EP-A2- 1 653 782
- WO-A1-2004/056608
- DE-A1- 10 215 472
- DE-A1- 10 359 196
- US-A- 4 291 302
- US-A1- 2006 028 327

## Beschreibung

Die vorliegende Erfindung betrifft ein Verfahren zum Betrieb einer Leuchte eines Anhängers nach den oberbegrifflichen Merkmalen nach Anspruch 1. Ferner betrifft die Erfindung eine Schaltungsanordnung nach den oberbegrifflichen Merkmalen nach Anspruch 6.

Fahrzeuge für den Straßenverkehr bestehen teilweise aus einem Fahrzeugzug, der ein Zugfahrzeug sowie einen oder mehrere Anhänger aufweist. Zugfahrzeug und Anhänger sind miteinander gekoppelt. Zugfahrzeuge können beispielsweise Personenkraftwagen, Lastkraftwagen oder dergleichen sein. Im Sinne der Erfindung kann ein Zugfahrzeug darüber hinaus auch ein von einem Zugfahrzeug gezogener Anhänger sein, an dem ein weiterer Anhänger angekoppelt ist. Anhänger sind Fahrzeuge, die während eines Fahrzustands nicht aktiv angetrieben werden. Sie können demnach auch in Schlepp genommene Fahrzeuge umfassen, die einen eigenen Antrieb aufweisen. Darüber hinaus sind Anhänger beispielsweise solche mit einer eigenen Deichsel oder auch Auflieger, insbesondere Fahrradträger oder dergleichen. Diese können über Kopplungsmittel mit dem Zugfahrzeug gekoppelt werden, um den Fahrzeugzug zu bilden. Gesetzlich vorgeschrieben ist unter anderem eine ordnungsgemäße Beleuchtung des Anhängers, was beispielsweise einen bestimmungsgemäßen Betrieb von Rücklichtern, Blinklichtern, Bremslichtern und dergleichen umfaßt. Dazu ist eine elektrische Verbindung zwischen dem Zugfahrzeug und dem Anhänger vorgesehen. Diese weist in der Regel eine Steckverbindung mit einem Stecker und einer Steckdose auf. Diese sind mit entsprechenden Verbindungsleitungen des Zugfahrzeugs beziehungsweise des Anhängers verbunden.

Bislang sind die Anhänger hierfür mit Glühlampen versehen, die die entsprechenden Beleuchtungen ermöglichen. Zum Betrieb dieser Lampen ist oftmals jeweils ein Ausgangsanschluß der Steckdose des Zugfahrzeugs entsprechend ausgerüstet und wird über die elektrische Steckverbindung mit den entsprechenden Glühlampen des beziehungsweise der Anhänger elektrisch verbunden. Moderne Steuerungen für den Ausgangsanschluß des Zugfahrzeugs sehen eine Überwachung der Glühlampe des Anhängers vor, wobei insbesondere Kurzschluß und Unterbrechung des Glühfadens der Glühlampe überwacht wird. Liegt ein entsprechender Defekt vor, erfolgt eine Meldung im Zugfahrzeug, insbesondere im Bereich der Armaturen, so daß ein Fahrer des Zugfahrzeugs über die Störung beziehungsweise die Funktion der entsprechenden Glühlampe informiert ist.

Zur Überwachung wird steuerungsseitig beispielsweise ein Strom bei Betrieb der entsprechenden Glühlampe gemessen. Ist dieser in einem zulässigen Bereich erfolgt keine Meldung. Überschreitet beziehungsweise unterschreitet der Strom dagegen einen vorgebbaren Schwellwert, wird eine entsprechende Fehlermeldung im Zugfahrzeug angezeigt. Neben der Überwachung des Einschaltszustands der Glühlampe wird ferner eine Überwachung der Glühlampe im ausgeschalteten Zustand durchgeführt. Dabei wird im ausgeschalteten Zustand ein kurzer Spannungsimpuls auf die Glühlampe gegeben, so daß diese nicht sichtbar aufleuchten kann. Während des Spannungsimpulses wird der entsprechende Strom durch die Glühlampe gemessen und wie vorher ausgewertet. Eine entsprechende Meldung erfolgt im Zugfahrzeug.

Mittlerweile werden Beleuchtungen von Anhängern statt mit Glühlampen mit Leuchtdioden ausgerüstet. Die Leuchtdioden können beispielsweise durch einzelne Leuchtdioden, aber auch durch Leuchtdioden-Anordnungen (Arrays) in einer Zusammenschaltung von mehreren einzelnen Leuchtdioden bestehen, sowie auch durch andere Licht emittierende Halbleiter wie SLD's oder dergleichen gebildet sein. Bei der Verwendung von Leuchtdioden bei Anhängerleuchten besteht nunmehr das Problem, daß vorhandene Ausgangsanschlüsse des Zugfahrzeugs zu deren Ansteuerung ungeeignet sind. Dies resultiert zum einen aus unterschiedlichen Anforderungen hinsichtlich der Betriebsspannung sowie auch unterschiedlichen Anforderungen hinsichtlich des Stromverbrauchs. In der Regel benötigen Licht emittierende Halbleiter wie Leuchtdioden erheblich weniger elektrische Energie als vergleichbar leuchtstarke Glühlampen. Aus diesem Grund können die bei den bisherigen Anschlüssen vorhandenen Überwachungseinrichtungen nicht zum Einsatz kommen. Zwar kann durch Spannungsanpassung die Anforderung hinsichtlich der Betriebsspannung erreicht werden, jedoch erfordert das unterschiedliche physikalische Verhalten dieser Leuchtmittel ein gänzlich anderes Überwachungskonzept. Wird beispielsweise eine Leuchtdiode mit einem Spannungsimpuls geeignet für Glühlampen im ausgeschalteten Zustand beaufschlagt, so erzeugt diese aufgrund ihres unterschiedlichen physikalischen Prinzips im Gegensatz zur Glühlampe eine Leuchtwirkung. Dies führt zu störender Lichtaussendung und ist im übrigen nicht konform mit der Gesetzgebung.

Das Problem tritt insbesondere dann auf, wenn ein Zugfahrzeug, dessen Ausgangsanschlüsse für den Betrieb normaler Glühlampen am Anhänger ausgerüstet ist, mit einem Anhänger elektrisch verbunden werden soll, der anstelle von Glühlampen Leuchtdioden als Leuchtmittel aufweist. In diesem Fall sind die Anschlüsse inkompatibel, was nicht zu Fehlfunktionen sondern auch zu Defekten der Ausgangsanschlüsse beziehungsweise der Leuchtdioden im Anhänger führen kann. DE 102 15 472 A1 zeigt ein Verfahren und eine Vorrichtung nach der Präambel von Anspruch 1 bzw. 6.

Die vorliegende Erfindung hat es sich zur Aufgabe gemacht, hier eine Möglichkeit zu schaffen, mit der auf einfache Weise das vorgenannte Problem beseitigt werden kann.

Als **Lösung** wird mit der vorliegenden Erfindung ein Verfahren nach Anspruch 1 und eine Schaltungsanordnung nach Anspruch 6 vorgeschlagen.

Mit der Erfindung ist es demnach erstmals möglich, durch Zwischenschaltung der Schaltungsanordnung in die elektrische Verbindung zwischen Anhänger und Zugfahrzeug eine entsprechende Anpassung zu erreichen, so daß ein mit Leuchtdioden bestückter Anhänger hinsichtlich seiner elektrischen Anlage ebenso betreibbar ist, wie ein Anhänger, der mit Glühlampen bestückt ist. Eingriffe in die elektrischen Anlagen des Zugfahrzeugs beziehungsweise des Anhängers können weitgehend vermieden werden. Zur Erreichung dieses Zieles ist zunächst ein Pegelumsetzer zwischen dem ersten und dem zweiten Anschluß vorgesehen, so daß die Betriebsspannung, die in der Regel für Leuchtdioden deutlich unterhalb der Betriebsspannung für Glühlampen liegt, angepaßt wird. Der Pegelumsetzer kann beispielsweise durch einen elektronischen Spannungsteiler, der Widerstände, Zenerdioden und dergleichen aufweisen kann, gebildet sein. Natürlich können auch elektronische Funktionseinheiten wie DC-DC-Wandler und dergleichen zum Einsatz kommen. Ferner weist der Adapter eine Glühlampensimulationseinheit auf, so daß bezüglich des Ausgangsanschlusses des Zugfahrzeugs die Funktion einer Glühlampe simuliert wird. Dies bewirkt, daß die bereits bezüglich des Ausgangsanschlusses des Zugfahrzeugs vorgesehenen Überwachungseinrichtungen ordnungsgemäß weiter zur Überwachung eingesetzt werden können. Es sind demnach zugfahrzeugseitig keine Veränderungen bezüglich des Ausgangsanschlusses vorzunehmen. Die Glühlampensimulationseinheit ist vorzugsweise dazu vorgesehen, im eingeschalteten Zustand den einer vergleichbaren Glühlampe entsprechenden Strom durch den Ausgangsanschluß im Zugfahrzeug fließen zu lassen. Dies kann durch einen entsprechend steuerbaren Halbleiter erfolgen. Dieser kann beispielsweise durch einen Transistor, einen Thyristor, insbesondere einem Feldeffekttransistor und dergleichen gebildet sein. Vorzugsweise ist der Transistor derart ausgelegt, daß er die entsprechende Leistung als Verlustleistung abführen kann. Natürlich kann auch ein zusätzlicher Widerstand vorgesehen sein, der für die Verlustleistungsabfuhr zuständig ist. In diesem Fall kann der Transistor kleiner konzipiert sein. Ferner ist eine Strommeßeinheit vorgesehen, mit der der Strom vom Adapter zur Leuchtdiode erfaßt werden kann. Vorzugsweise steuert die Strommeßeinheit die Glühlampensimulationseinheit derart, daß ein Defekt einer Leuchtdiode einen entsprechenden Defekt einer fiktiven Glühlampe simuliert. Diese Störung kann zugfahrzeugseitig erfaßt und entsprechend zur Meldung gebracht werden. Die Strommeßeinheit kann beispielsweise aus einem Shunt beziehungsweise Serienwiderstand bestehen, der einen Transistor ansteuert. Natürlich können auch weitere Schaltungen zum Einsatz kommen.

So schlägt die Erfindung beispielsweise in einer vorteilhaften Weiterbildung vor, daß die Strommeßeinheit ein resistives Element und/oder einen Stromspiegel aufweist. Das resistive Element kann durch einen elektronischen Widerstand gebildet sein. Dieser ist vorzugsweise mit dem Stromspiegel verbunden, in dem zum Beispiel die Emittoren zweier Transistoren des Stromspiegels jeweils mit einem Ende des resistiven Elements verbunden sind. Das resistive Element ist in dieser Ausgestaltung eine zweipoliges elektronisches Bauteil, es kann jedoch auch durch eine Bauelementanordnung gebildet sein, die aus mehreren einzelnen, zusammengeschalteten elektronischen Bauteilen besteht. Auf diese Weise läßt sich eine gute Genauigkeit des Meßergebnisses erreichen.

In einer vorteilhaften Weiterbildung wird vorgeschlagen, daß mittels der Strommeßeinheit die Glühlampensimulationseinheit steuerbar ist. So kann beispielsweise ein Überstrom aufgrund eines Defekts einer Leuchtdiode einen entsprechenden Strom der Glühlampensimulationseinheit nach sich ziehen. Auf diese Weise kann die bereits vorhandene Überwachung des Ausgangsanschlusses und des Zugfahrzeugs für die Überwachung der Leuchtdiode des Anhängers zum Einsatz kommen.

Darüber hinaus wird vorgeschlagen, daß leuchtdiodenseitig eine Filtereinheit, insbesondere ein Kondensator - wie hier dargestellt - angeordnet ist. Eine durch den Kondensator bewirkte Pufferung dient unter anderem dazu, daß ein Spannungsimpuls zum Prüfen der Leuchtdiode im ausgeschalteten Zustand nicht zu einer sichtbaren Leuchtwirkung führt. Der Kondensator kann natürlich auch im Bereich der Leuchtdiode im Anhänger angeordnet sein, oder sowohl an der Leuchtdiode im Anhänger als auch in der Schaltungsanordnung. Vorzugsweise ist der Kondensator hinsichtlich seiner Kapazität an die relevanten vorgelagerten Schaltungsteile angepaßt, so daß eine optimale Unterdrückung einer Leuchtwirkung erzielt werden kann. Als Bezugspotential ist hier eine Masse vorgesehen, die mit einer zugfahrzeugseitigen Masse elektrisch gekoppelt ist. Natürlich kann das Bezugspotential auch eine Betriebsspannung des Zugfahrzeugs oder dergleichen sein.

Gemäß einer weiteren Ausgestaltung weist die Schaltungsanordnung einen Kommunikationsanschluß auf. Auf diese Weise ist es möglich, Zustandsdaten direkt an eine gewünschte Abfragestelle zu übermitteln. Dies kann beispielsweise durch einen zusätzlichen Stecker oder auch über die bereits bestehende Kommunikationsverbindung erfolgen. So kann beispielsweise vorgesehen sein, daß ein Kommunikationskanal trägerfrequenzgesteuert über bereits vorhandene, mit anderen Funktionen belegte Anschlüsse erfolgt. Natürlich können auch umgekehrt Steuerbefehle an die Schaltungsanordnung gesendet werden, um beispielsweise die Glühlampensimulationsschaltung oder dergleichen zu steuern, zu testen, anzupassen oder dergleichen. Auch eine Einstellung der Schaltungsanordnung bezüglich des Typs von verwendeten Leuchtdioden kann vorgesehen sein.

Von besonders praktischem Vorteil erweist es sich, wenn die Schaltungsanordnung in einem eigenen Gehäuse angeordnet ist. Vorzugsweise ist das Gehäuse steckverbinderförmig ausgebildet, welches an gegenüberliegenden Seiten jeweils eine entsprechende Steckverbindung aufweist. Auf diese Weise ist es möglich, einen Adapter zu bilden und diesen in eine ursprünglich vorgesehene Steckverbindung einfach zwischenzuschalten und so auf einfache Weise eine Anpassung zu erreichen. Alle erforderlichen Komponenten für den Adapter sind in dem Gehäuse angeordnet. Eine hohe Flexibilität kann erreicht werden. Darüber hinaus kann ein einfaches Nachrüsten vorgenommen werden. Das Gehäuse weist dazu vorzugsweise einen Steckverbinder und/oder eine Steckkupplung auf. Durch Wahl einer entsprechenden Schutzart kann eine zuverlässige Funktion lediglich durch Zwischenstecken des Adapters in eine ursprünglich vorgesehene Steckverbindung erreicht werden.

In einer besonderen Weiterbildung wird vorgeschlagen, daß das Gehäuse einen Masseanschluß aufweist. Auf diese Weise kann eine bestimmungsgemäße Funktion der Schaltungsanordnung auf einfache Weise erreicht werden. Darüber hinaus erweist sich der Masseanschluß dahingehend als vorteilhaft, daß die im Gehäuse angeordnete elektronische Schaltung vor elektromagnetischer Störeinwirkung geschützt werden kann. Besonders vorteilhaft erweist sich dies bei einem Gehäuse, welches elektrisch leitfähig ist. Vorzugsweise ist das Gehäuse dazu aus einem elektrisch leitfähigen Kunststoff, aus einem Metall oder dergleichen gebildet.

Erfindungsgemäß wird vorgeschlagen, daß die Schaltungsanordnung einen Energiespeicher aufweist. Auf diese Weise ist es möglich, die durch die Glühlampensimulation hervorgerufene Verlustleistung zu reduzieren und die Energie in dem Energiespeicher zwischenzuspeichern. Diese kann darüber hinaus für weitere Funktionen in der Schaltungsanordnung verwendet werden. Daneben besteht natürlich auch die Möglichkeit, die im Energiespeicher gespeicherte Energie zumindest teilweise zum Zugfahrzeug zurückzuspeisen. Hierdurch wird nicht nur die Energieeffizienz erhöht, sondern auch die Verlustleistung in der Schaltungsanordnung selbst reduziert. Insbesondere bei einem weiten Temperaturbereich entstehen hierdurch Vorteile.

Mit der Erfindung wird ferner ein Verfahren zum Betrieb einer Leuchtdiode eines Anhängers durch einen Ausgangsanschluß des Zugfahrzeugs, der für eine Beanspruchung durch eine elektrische Glühlampe bestimmt ist, vorgeschlagen, wobei eine elektrische Spannung des Ausgangsanschlusses mittels eines Pegelumsetzers zu einer für die Leuchtdiode geeigneten elektrischen Spannung umgewandelt wird, der Strom der Leuchtdiode erfaßt und ausgangsanschlußseitig ein elektrischer Strom einer Glühlampe simuliert wird. Hierdurch wird erreicht, daß ein für konventionellen Glühlampenbetrieb vorgesehener Ausgangsanschluß für den Betrieb einer Leuchtdiode ertüchtigt wird. Damit eine ordnungsgemäße Funktion an dem Ausgangsanschluß erreicht werden kann, sind mehrere Maßnahmen durchzuführen. Zum einen muß die Betriebsspannung, die gemäß Ausgangsanschluß an Glühlampen angepaßt ist, umgewandelt werden, so daß sie sich für die Ansteuerung von Leuchtdioden eignet. In der Regel erfolgt dies durch eine Spannungsreduzierung. Darüber hinaus sind die Zusatzfunktionen zu gewährleisten, da eine Leuchtdiode bei gleicher Leuchtstärke deutlich weniger Strom benötigt als eine vergleichbar leuchtstarke Glühlampe. Eine Überwachungsschaltung bezüglich des Ausgangsanschlusses würde deshalb im Normalfall bei Anschluß einer Leuchtdiode einen Fehler der Glühlampe detektieren, da der Stromverbrauch im eingeschalteten Zustand zu gering ist. Aus diesem Grund ist eine Glühlampensimulationsschaltung erforderlich, die den Stromverbrauch einer Glühlampe bezüglich des Ausgangsanschlusses simuliert. Natürlich könnte diese Glühlampensimulationsschaltung permanent aktiviert sein, was jedoch zu dem Problem führen würde, daß ein Defekt einer Leuchtdiode nicht mehr erkannt werden kann. Um dieses Problem zu vermeiden wird zusätzlich der Strom von der Leuchtdiode erfaßt. Dieser kann ausgewertet werden und zur Steuerung der Glühlampensimulation verwendet werden. Auf diese Weise kann das Funktionsspektrum bezüglich des Ausgangsanschlusses auch bei Betrieb mit einer Leuchtdiode aufrechterhalten werden. Ferner kann mittels des erfaßten Stroms der Leuchtdiode ausgangsanschlußseitig ein elektrischer Strom einer Glühlampe simuliert werden. Diese Ausgestaltung ist auch deswegen zweckmäßig, weil ansonsten die Detektion eines nicht angeschlossenen Anhängers erschwert, wenn nicht sogar unmöglich würde. Dieser Fall kann beispielsweise auftreten, wenn vergessen wurde, den Stecker des Anhängers in die Steckdose des Zugfahrzeugs einzustecken, oder wenn sich dieser während des bestimmungsgemäßen Betriebs gelöst hätte. Durch die Simulation einer Glühlampe wird ein auswertbares Signal am zugfahrzeugseitigen Anschluß bereitgestellt.

Als besonders vorteilhaft erweist es sich, wenn für die Stromerfassung der Leuchtdiode ein Stromspiegel verwendet wird. Mit dem Stromspiegel kann eine genaue Erfassung des Stroms der Leuchtdiode erreicht werden. Darüber hinaus eignet sich die Verwendung eines Stromspiegels zur Erreichung einer zuverlässigen Funktion über einen weiten Temperaturbereich. Dies ist insbesondere deshalb von Vorteil, weil die Schaltungsanordnung der Erfindung in der Regel im Außenbetrieb zum Einsatz kommen wird. Das bedeutet, daß neben der zuverlässigen Funktion bei sehr tiefen Temperaturen, beispielsweise Frost im Winter, auch eine zuverlässige Funktion bei hohen Temperaturen im Sommer, insbesondere in Verbindung mit direkter Sonneneinstrahlung, gewährleistet werden muß.

Die Verwendung eines Stromspiegels erlaubt es ferner, die Strommeßeinheit auf einfache Weise einzustellen, indem der Stromspiegel durch Anpassung des Stroms in einem Zweig des Stromspiegels entsprechend eingestellt wird. Von Vorteil ist dies insbesondere dafür, wenn die Schaltungsanordnung für den Betrieb unterschiedlicher Leuchtdiodentypen verwendet werden soll. Auf diese Weise kann eine hohe Flexibilität erreicht werden.

Darüber hinaus wird vorgeschlagen, daß die Stromerfassung temperaturkompensiert wird. Hierzu können beispielsweise geeignete elektronische Bauelemente verwendet werden, die Temperaturkoeffizienten aufweisen, die zu einer Aufhebung bezüglich einer Gesamtwirkung führen. Hierzu eignen sich insbesondere Halbleiterbauelemente die entsprechend ihrer Temperaturkoeffizienten ausgewählt sind. Natürlich können auch geeignete temperaturstabile Schaltungen verwendet werden.

Darüber hinaus wird vorgeschlagen, daß zur Stromerfassung ein resistives Element verwendet wird. Dieses kann beispielsweise in Form eines elektronischen Widerstands, einer Zenerdiode oder dergleichen erfolgen. Natürlich kann auch eine Bauelementschaltung aus mehreren Bauelementen vorgesehen sein, die eine entsprechende, gegebenenfalls einstellbare Wirkung hervorruft.

Von besonderem Vorteil ist es, wenn eine am resistiven Element anliegende elektrische Spannung begrenzt wird. Insbesondere bei einem Kurzschluß kann erreicht werden, daß die Strommeßeinheit hinsichtlich Überlastung geschützt werden kann. Da der Eingang der Strommeßeinheit in der Regel ein empfindlicher Meßeingang ist, ist dieser nur begrenzt gegen Überlastung geschützt. Auf diese Weise kann die Zuverlässigkeit weiter verbessert werden.

Es wird weiterhin vorgeschlagen, dass die Glühlampensimulationseinheit deaktiviert wird, wenn die Leuchte des Anhängers ein Störungssignal abgibt. Diese Ausgestaltung eignet sich insbesondere für Leuchtmittel, die eine eigene Störungsüberwachung enthalten und ein entsprechendes Signal aussenden. In diesem Fall erweist es sich als zweckmäßig, wenn die Glühlampensimulationseinheit deaktiviert wird, so dass das entsprechende Signal der Leuchte des Anhängers durch die Schaltungsanordnung hindurch zum Zugfahrzeug weitergeleitet werden kann. Die übergeordnete, zugfahrzeugseitige Steuerung kann dann das Signal erkennen und auswerten und eine entsprechende Meldung veranlassen. Auf diese Weise kann die Flexibilität der Schaltungsanordnung und des Verfahrens weiterverbessert werden.

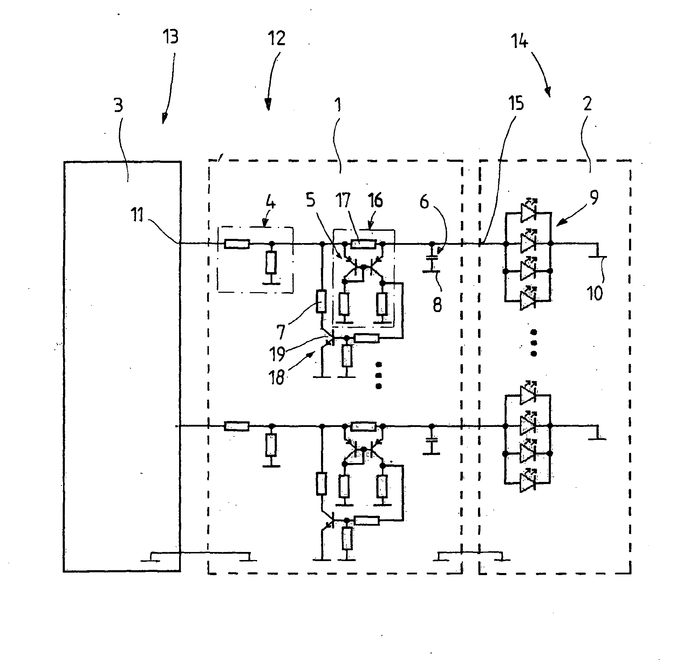

Weitere Vorteile und Merkmale sind der folgenden Beschreibung zu entnehmen. Die Zeichnung ist eine Schemazeichnung und dient lediglich der Erläuterung des folgenden Ausführungsbeispiels.

Es zeigt:
Die einzige Figur einen Ausschnitt eines elektronischen Prinzipschaltbilds eines Adapters.

Die einzige Figur zeigt schematisch ein Prinzipschaltbild eines in einem Zugfahrzeug 13 angeordneten Anhängersteuergeräts 3, welches über eine nicht näher bezeichnete Steckverbindung mit einem Adapter 1 gemäß der Erfindung elektrisch verbunden ist, der eine elektrische Verbindung 12 zwischen dem Zugfahrzeug 13 und dem Anhänger 14 herstellt. Der Adapter 1 enthält eine Schaltungsanordnung gemäß der Erfindung. Die Schaltungsanordnung kann natürlich auch im Zugfahrzeug oder im Anhänger angeordnet sein. Der Adapter 1 ist in einem nicht näher bezeichneten Gehäuse angeordnet. An diesem ist ferner über eine weitere, ebenfalls nicht näher bezeichnete elektrische Steckverbindung eine in einem Anhänger 14 angeordnete Anhängerleuchte 2 mit mehreren Leuchtdioden-Anordnungen 9 angeschlossen. Für jede Leuchtdioden-Anordnung 9 ist ein eigener Steuerkanal vorgesehen. In der Figur sind lediglich exemplarisch zwei Kanäle dargestellt. Natürlich kann die Anzahl der Kanäle bedarfsgemäß gewählt werden.

Über die Steckverbindung zwischen dem Zugfahrzeug 13 und dem Adapter 1 ist ein zugfahrzeugseitiger Ausgangsanschluß 11 im Anhängersteuergerät 3 mit einem Pegelumsetzer in Form eines Spannungsteilers 4 elektrisch gekoppelt. Mittels des Spannungsteilers 4 wird die vom Ausgangsanschluß 11 bereitgestellte Spannung auf ein für die Leuchtdioden-Anordnung 9 geeignetes Niveau reduziert.

Dem Spannungsteiler 4 nachgeordnet ist ein mit einem Widerstand 17 elektrisch gekoppelter Stromspiegel 5, der einen Stromsensor 16 als Strommeßeinheit bildet. Der elektrische Widerstand 17 ist als resistives Element zwischen die beiden Emittoren der Transistoren des Stromspiegels 5 geschaltet. Ein anhängerseitiger Eingangsanschluß 15 ist im Anhänger 14 mit der Leuchtdioden-Anordnung 9 elektrisch verbunden. Schaltungstechnisch strömt der Strom durch die Leuchtdioden-Anordnung 9 hiermit auch durch den Widerstand 17 des Stromsensors 16.

Zwischen Stromsensor 16 und Spannungsteiler 4 ist ferner eine Glühlampensimulationseinheit 18 geschaltet, die einen mittels eines Transistors 19 zuschaltbaren Widerstand 7 aufweist, der über einen weiteren Spannungsteiler vom Stromspiegel 5 aus steuerbar ist. Natürlich könnte der Widerstand 7 auch mit dem zugfahrzeugseitigen Anschluß 11 des Adapters direkt verbunden sein. Sein Wert des elektrischen Widerstands wäre dann anzupassen.

Erfolgt nun eine Spannungsbeaufschlagung des Ausgangsanschlusses 11, weil die entsprechende Leuchte des Anhängers 14 eingeschaltet werden soll, so wird zunächst die Spannung über dem Spannungsteiler 4 auf das für die Leuchtdioden-Anordnung 9 geeignete Maß reduziert. Der Stromfluß des Spannungsteilers 4 durch den Widerstand 17 zur Leuchtdioden-Anordnung 9 bewirkt zugleich, daß der Widerstand 7 mittels des Transistors 19 eingeschaltet wird. Hierdurch wird bezüglich des Ausgangsanschlusses 11 der Stromverbrauch einer entsprechenden Glühlampe simuliert. Auf diese Weise kann der Einschaltzustand zugfahrzeugseitig wie bisher bei Glühlampen geprüft werden. Sinkt nun der Strom der Leuchtdiodenanordnung 9 aufgrund eines Defekts in Form einer Unterbrechung einer einzelnen Leuchtdiode oder auch mehrerer, so reduziert sich der Stromfluß, der durch den Stromspiegel 5 detektiert wird, wodurch zugleich auch der Stromfluß der Glühlampensimulationseinheit 18 entsprechend reduziert wird. Hierdurch ist es möglich, daß eine entsprechende Überwachungsschaltung zugfahrzeugseitig die Stromabnahme detektiert und bei Unterschreiten eines vorgegebenen Schwellwerts eine entsprechende Meldung abgibt. Ebenso wird bezüglich eines Überstroms, verursacht durch einen Kurzschluß einer oder mehrerer Leuchtdioden, verfahren. Dies führt zu einer entsprechenden Stromerhöhung, die mittels der Glühlampensimulationseinheit 18 ebenfalls entsprechend verstärkt wird, so daß eine entsprechende Detektion durch die Überwachungseinheit im Zugfahrzeug 13 erfolgen kann.

Mit der vorbenannten Schaltung beziehungsweise dem erfindungsgemäßen Verfahren ist es somit möglich, den Einschaltzustand der Leuchtdioden-Anordnung 9 zu überwachen. Moderne Zugfahrzeugsteuerungen umfassen jedoch auch die Überwachung von Glühlampen während des Ausschaltzustands, in dem ein kurzer Einschaltimpuls auf die Glühlampe gegeben wird, der so kurz bemessen ist, daß kein sichtbares Aufleuchten erfolgt. Auch diese Funktion wird mit dem Adapter 1 realisiert. Der Adapter 1 weist hierzu einen Kondensator 6 auf, der einerseits an der Steckverbindung des Adapters 1 zum Anhänger 14 elektrisch angeschlossen ist und andererseits mit seinem zweiten Anschluß gegen Masse 8 des Adapters 1 geschaltet ist. Der Kondensator 6 bewirkt eine Glättung, so daß der kurze Einschaltimpuls hinsichtlich seiner elektrischen Parameter auf ein Maß reduziert wird, so daß die Leuchtdioden-Anordnung 9 keine sichtbare Leuchtwirkung erzeugt. Der Strom wird vor dem Kondensator 6 mit dem Stromsensor 16 gemessen und die Glühlampensimulationseinheit 18 entsprechend angesteuert, so daß die Überwachungseinrichtung des Zugfahrzeugs 13 feststellen kann, ob eine ordnungsgemäße Funktion gegeben ist. Auf diese Weise kann die Leuchtdioden-Anordnung 9 also auch im ausgeschalteten Zustand geprüft werden.

Zur Vervollständigung des Schaltbilds sind ferner Masseverbindungen zwischen dem Anhängersteuergerät 3, dem Adapter 1 und der Anhängerleuchte 2 vorgesehen, so daß ein Stromkreis geschlossen ist.

Natürlich können hiermit auch Kontaktstörungen an den Verbindungsstellen und dergleichen überwacht werden.

Das in der Figur dargestellte Ausführungsbeispiel dient lediglich der Erläuterung der Erfindung und ist für diese nicht beschränkend. So können natürlich einzelne Bauelemente bedarfsweise variiert werden, um eine entsprechende Anpassung erreichen zu können. Auch zusätzliche Funktionen können vorgesehen sein, so beispielsweise eine Begrenzung des Spannungsabfalls über den Stromspiegel 5. Eine solche Begrenzung kann beispielsweise mittels Zenerdioden oder dergleichen vorgesehen sein.

**Bezugszeichenliste**

| | | | |
|---|---|---|---|
| 1 | Adapter | 17 | Widerstand |
| 2 | Anhängerleuchte | 18 | Glühlampensimulationseinheit |
| 3 | Anhängersteuergerät | 19 | Transistor |
| 4 | Spannungsteiler | | |
| 5 | Stromspiegel | | |
| 6 | Kondensator | | |
| 7 | zuschaltbarer Widerstand | | |
| 8 | Masse | | |
| 9 | LED-Anordnung | | |
| 10 | Masse | | |
| 11 | Ausgangsanschluß | | |
| 12 | elektrische Verbindung | | |
| 13 | Zugfahrzeug | | |
| 14 | Anhänger | | |
| 15 | Eingangsanschluß | | |
| 16 | Stromsensor | | |

## Patentansprüche

1. Verfahren zum Betrieb einer Leuchte (2) eines Anhängers (14), die als Leuchtmittel eine Leuchtdiode (9) verwendet, durch einen Ausgangsanschluß (11) eines Zugfahrzeugs (13), der für eine Beanspruchung durch eine elektrische Glühlampe bestimmt ist und mittels einer Zugfahrzeugsteuerung überwacht wird, wobei der Strom der Leuchtdiode (9) in einer an den Ausgangsanschluss (11) des Zugfahrzeugs (13) angeschlossenen Schaltungsanordnung (1) erfaßt und ausgewertet und zur Steuerung einer Glühlampensimulationseinheit (18) verwendet wird, sodaß ausgangsanschlußseiting mittels der Glühlampesimulationseinheit (18) ein elektrischer Strom einer Glühlampe simuliert wird, wobei die Schaltungsanordnung (1) im Betrieb mit der Leuchte (2) elektrisch gekoppelt ist,
**dadurch gekennzeichnet,**
**daß** die bei der Glühlampensimulation hervorgerufene Verlustleistung reduziert wird, zu welchem Zweck die aus der Verlustleistung resultierende Energie in einem in der Schaltungsanordnung (1) vorgesehenen Energiespeicher zwischengespeichert und zumindest teilweise zum Zugfahrzeug (13) zurückgespeist wird.

2. Verfahren nach Anspruch 1, **dadurch gekennzeichnet, daß** für die Stromerfassung der Leuchtdiode (9) ein Stromspiegel (5) verwendet wird.

3. Verfahren nach Anspruch 2, **dadurch gekennzeichnet, daß** der Stromspiegel eingestellt wird.

4. Verfahren nach einem der Ansprüche 1 bis 3, **dadurch gekennzeichnet, daß** die Stromerfassung temperaturkompensiert wird.

5. Verfahren nach einem der Ansprüche 1 bis 4, **dadurch gekennzeichnet, daß** die Glühlampensimulationseinheit (18) deaktiviert wird, wenn die Leuchte (2) des Anhängers (14) ein Störungssignal abgibt.

6. Schaltungsanordnung (1) zur Durchführung des Verfahrens nach einem der vorhergehenden Ansprüche, mit einem ersten und einem zweiten Anschluß sowie mit einer Glühlampensimulationseinheit (18) und einer die Glühlampensimulationseinheit (18) steuernden Strommeßeinheit (16), wobei die Schaltungsanordnung (1) geeignet ist, eine elektrische Verbindung (12) zwischen einem Zugfahrzeug (13) und einem Anhänger(14) eines Fahrzeugzugs herzustellen, wobei ein von einer Zugfahrzeugsteuerung überwachter zugfahrzeugseitiger Anschluss (11), der an die Schaltungsanordnung (1) im Betrieb zum ersten Anschluss elektrisch gekoppelt ist, für eine Beanspruchung durch eine elektrische Glühlampe bestimmt ist und ein anhängerseitiger Anschluss (15), der an die Schaltungsanordnung (1) imBetrieb zum zweiten Anschluss elektrisch gekoppelt ist, mit einer Leuchte (2) des Anhängers (14) elektrisch verbunden ist, welche Leuchte (2) als Leuchtmittel eine Leuchtdiode (9) aufweist,
**dadurch gekennzeichnet,**
**dass** die Schaltungsanordnung (1) für ein Reduzieren der bei der Glühlampensimulation hervorgerufenen Verlustleistung und ein zumindest teilweises Zurückspeisen der aus der Verlustleistung resultierenden Energie zum Zugfahrzeug (13) eingerichtet ist, zu welchem Zweck die Schaltungsanordnung (1) einen Energiespeicher aufweist.

7. Schaltungsanordnung nach Anspruch 6 **gekennzeichnet durch** einen Kommunikationsanschluß.

8. Schaltungsanordnung nach einem der Ansprüche 6 oder 7, **gekennzeichnet durch** ein eigenes Gehäuse.

9. Schaltungsanordnung nach Anspruch 8, **dadurch gekennzeichnet, daß** das Gehäuse einen Steckverbinder und/oder eine Steckkupplung aufweist.

## Claims

1. A method for operating a light (2) of a trailer (14), which light uses a light diode (9) as illuminant, by means of an outlet connection (11) of a towing vehicle (13), which outlet connection is adapted to be used by an electric light bulb and is monitored by means of a towing vehicle control, wherein the current of the light diode (9) is detected and evaluated in a circuitry (1) connected to the outlet connection (11) of the towing vehicle (13) and used for controlling a light bulb simulation unit (18), such that an electric current of a light bulb is simulated on the side of the outlet connection by means of the light bulb simulation unit (18), wherein, while being operated, the circuitry (1) is electrically coupled to the light (2),
**characterized in that**
the power dissipation caused by the light bulb simulation will be reduced, for which purpose the energy resulting from the power dissipation will be temporarily stored in an energy storage device provided in the circuitry (1) and will be at least partially fed back to the towing vehicle (13).

2. A method according to claim 1, **characterized in that** a current mirror (5) is used for the current detection of the light diode (9).

3. A method according to claim 2, **characterized in that** the current mirror is adjusted.

4. A method according to one of the claims 1 through 3, **characterized in that** the current detection is temperature compensated.

5. A method according to one of the claims 1 through 4, **characterized in that** the light bulb simulation unit (18) will be deactivated, if the light (2) of the trailer (14) sends out a disturbance signal.

6. A circuitry (1) for carrying out the method according to one of the preceding claims, comprising a first and a second connection as well as a light bulb simulation unit (18) and a current measurement unit (16) which controls the light bulb simulation unit (18), wherein the circuitry (1) is able to establish an electric connection (12) between a towing vehicle (13) and a trailer (14) of a vehicle-trailer combination, wherein a connection (11) on the side of the towing vehicle which is monitored by a towing vehicle control and which is electrically coupled to the first connection of the circuitry (1) in operation, is destined for being used by an electric light bulb, and a connection (15) on the side of the trailer, which is electrically coupled to the second connection of the circuitry (1) in operation, is electrically connected to a light (2) of the trailer (14), which light (2) comprises a light diode (9) as illuminant,
**characterized in that**
the circuitry (1) is adapted to reduce the power dissipation caused by the light bulb simulation and to at least partially feed back the energy resulting from the power dissipation to the towing vehicle (13), for which purpose the circuitry (1) comprises an energy storing device.

7. A circuitry according to claim 6, **characterized by** a communication connection.

8. A circuitry according to one of the claims 6 or 7, **characterized by** an own housing.

9. A circuitry according to claim 8, **characterized in that** the housing comprises a plug connector and/or a plug coupling.

## Revendications

1. Procédé de fonctionnement d'une lampe (2) d'une remorque (14), laquelle lampe utilise une diode électroluminescente (9) en tant que source d'éclairage, par moyen d'un terminal de sortie (11) d'un véhicule de traction (13), lequel terminal de sortie est destiné à être utilisé par un ampoule électrique et est surveillé par moyen d'une commande de véhicule de traction, le courant de la diode électroluminescente (9) étant détecté et évalué par un agencement de circuit (1) connecté au terminal de sortie (11) du véhicule de traction (13) et étant utilisé pour commander une unité de simulation d'ampoule électrique (18) de sorte qu'un courant électrique d'un ampoule électrique est simulé du côté du terminal de sortie par l'intermédiaire de l'unité de simulation d'ampoule électrique, l'agencement de circuit (1) étant électriquement couplé à la lampe (2) dans l'état de fonctionnement,
**caractérisé en ce que**
la perte de puissance causée pendant la simulation d'ampoule électrique est réduite, à quelle fin l'énergie résultant de la perte de puissance est temporairement stockée dans un accumulateur d'énergie prévu dans l'agencement de circuit (1) et est au moins partiellement renvoyée au véhicule de traction (13).

2. Procédé selon la revendication 1, **caractérisé en ce qu'**on utilise un miroir de courant (5) pour détecter le courant de la diode électroluminescente (9).

3. Procédé selon la revendication 2, **caractérisé en ce que** le miroir de courant est ajusté.

4. Procédé selon l'une des revendications 1 à 3, **caractérisé en ce que** la détection de courant est compensée en température.

5. Procédé selon l'une des revendications 1 à 4, **caractérisé en ce que** l'unité de simulation d'ampoule électrique (18) sera désactivée, si la lampe (2) de la remorque (14) émet un signal de dysfonctionnement.

6. Agencement de circuit (1) destiné à exécuter un procédé selon l'une des revendications précédentes, comprenant un premier et un deuxième terminal ainsi qu'une unité de simulation d'ampoule électrique (18) et une unité de mesure de courant (16) qui commande l'unité de simulation d'ampoule électrique (18), l'agencement de circuit (1) étant capable d'établir une connexion électrique (12) entre un véhicule de traction (13) et une remorque (14) d'un train routier, un terminal (11) du côté du véhicule de traction, qui est surveillé par une commande de véhicule de traction et qui est électriquement couplé au premier terminal de l'agencement de circuit en état de fonctionnement, étant destiné à une utilisation par un ampoule électrique et un terminal (15) du côté de la remorque, lequel est électriquement couplé au deuxième terminal de l'agencement de circuit (1) en état de fonctionnement, étant électriquement relié à une lampe (2) de la remorque (14), laquelle lampe (2) comprend une diode électroluminescente (9) en tant que source d'éclairage,
**caractérisé en ce que**
l'agencement de circuit (1) est adapté à réduire la perte de puissance causée pendant la simulation d'ampoule électrique et à au moins partiellement renvoyer l'énergie résultant de la perte de puissance au véhicule de traction (13), à quelle fin l'agencement de circuit (1) comprend un accumulateur d'énergie.

7. Agencement de circuit selon la revendication 6, **caractérisé par** un port de communication.

8. Agencement de circuit selon l'une des revendications 6 ou 7, **caractérisé par** un boîtier propre à celui-ci.

9. Agencement de circuit selon la revendication 8, **caractérisé en ce que** le boîtier comprend un connecteur à fiches et/ou un coupleur à emboîtement.
